# FASCICULE DE BREVET EUROPEEN

(11) **EP 0 289 381 B1**
(45) Date de publication et mention de la délivrance du brevet: **03.02.1993**
(21) Numéro de dépôt: 88400842.6
(22) Date de dépôt: 08.04.1988
(51) Int. Cl.: G01D 15/22

(54) **Tête d'écriture pour machine à dessiner**
Schreibkopf für Zeichenapparat
Writing head for a drawing machine

(30) Priorité: 10.04.1987 FR 8705166
(43) Date de publication de la demande: 02.11.1988
(73) Titulaire: Océ Graphics France S.A., 94000 Créteil (FR)
(72) Inventeur: Richard, Jean-Louis, F-772200 Torcy (FR); Jaffres, Rémy, Saint Paul en Cornillon F-42240 Unieux (FR)
(74) Mandataire: Hanneman, Henri W., Dr.

(56) Documents cités:
- EP-A- 0 096 085
- DE-B- 2 616 128
- US-A- 4 559 717

## Description

La présente invention concerne une tête d'écriture pour machine à dessiner, et plus particulièrement une tête d'écriture du type comportant un corps de tête portant un outil d'écriture et monté mobile par rapport à un support d'écriture dans une première direction afin de produire un tracé sur celui-ci par déplacement relatif entre la tête et le support d'écriture, et des moyens de montage de l'outil d'écriture sur le corps de tête pour monter mobile l'outil d'écriture par rapport au corps de tête selon une deuxième direction (Z) entre une position de repos écartée du support d'écriture et une position de travail rapprochée du support d'écriture pour laquelle l'outil d'écriture produit effectivement un tracé sur le support d'écriture.

De telles machines à dessiner, du type traceurs, sont bien connues. En général, la tête d'écriture est fixée sur une pièce de support tel qu'un chariot mobile en translation suivant la première direction (Y) par rapport au support d'écriture, tandis que ce dernier est lui-même entraîné pour être déplacé dans une autre direction (X) perpendiculaire à la première. Un tracé désiré est produit sur le support d'écriture par une combinaison appropriée des mouvements de la tête d'écriture et du support d'écriture dans les directions respectives Y et X.

L'obtention de tracés rapides et précis demande des déplacements rapides de l'outil d'écriture, selon la deuxième direction (Z), entre ses positions écartée (repos) et rapprochée (travail) du support d'écriture et un guidage de l'outil d'écriture au moins lorsqu'il vient en position de travail au contact du support d'écriture. Dans de nombreuses machines, ces déplacements s'effectuent verticalement par rapport au support d'écriture (papier) positionné sur une enclume horizontale. C'est pourquoi, dans ce qui suit, il sera par commodité fait mention de mouvements verticaux pour désigner les déplacements de l'outil d'écriture selon la deuxième direction entre position de repos et position de travail.

Dans certaines machines connues, l'outil d'écriture est fixé sur un support et c'est ce support, portant l'outil, qui est mobile par rapport au corps de tête pour assurer les déplacements verticaux de l'outil.

Dans d'autres machines connues, afin de réduire au minimum la masse à mettre en mouvement au cours de ces déplacements verticaux, seul l'outil d'écriture est mobile verticalement en étant guidé sur le corps de tête.

La présente invention a pour but de fournir une structure de tête d'écriture simplifiée autorisant les déplacements verticaux de l'outil d'écriture avec la rapidité et la précision souhaitées.

Ce but est atteint au moyen d'une tête d'écriture du type défini en tête de la présente description et dans laquelle les moyens de montage de l'outil d'écriture sur le corps de tête comprennent :
un premier côté (21) fixé au corps de tête (10) ;
un deuxième côté (22) portant l'outil d'écriture (30) ;
deux bras parallèles rigides (23, 24) reliant le premier et le deuxième côté ; et
des parties de liaison formant charnières (23a, 23b, 24a, 24b) entre chaque bras et chacun des côtés, les premier et deuxième côtés, les bras et les parties de liaison formant un parallélogramme déformable de façon à permettre le déplacement de l'outil d'écriture par rapport au corps de tête selon la deuxième direction tout en maintenant l'outil d'écriture parallèle à ladite deuxième direction.

Avantageusement, les moyens de montage sont réalisés en une seule pièce et par moulage d'une matière plastique. Les parties de liaison formant charnières sont des parties amincies réalisées aux extrémités des bras.

Cette réalisation présente en premier lieu l'avantage de la simplicité et d'un coût de fabrication pouvant être très bas. De plus, les charnières ne présentent ni jeu, ni frottement sec et ne sont pas sensibles aux salissures.

Cette réalisation présente également l'avantage de la légèreté, ce qui est important au regard des temps de réponse de levée et d'abaissement de l'outil d'écriture.

Il est encore à noter que la simplicité de la structure de tête d'écriture proposée permet de réduire au minimum les opérations de montage.

Le guidage de l'outil entre positions de repos et de travail est assuré par son maintien parallèle au premier côté du parallélogramme qui est fixé sur le support de tête, les déplacements de l'outil entre ces positions étant commandés par des moyens d'actionnement de type quelconque, par exemple mécanique ou électromagnétique, comprenant un organe mobile agissant sur l'outil ou sur les moyens de montage de l'outil pour déformer ces derniers.

Selon le document EP-A-0 096 085 un outil d'écriture est relié au support de tête par des lames ressorts. Cet arrangement n'assure pas les mêmes functions que celui conforme à l'invention. En effet, une des deux lames peut se courber plus que l'autre. Le maintien de la tête n'est donc pas parfaitement assurer pendant des mouvements rapides. Le document US 4 559 717 montre une pièce moulée expansible avec des parties amincies formant charnières, pour permettre, par pivotement, de conférer à un plateau XY un mouvement de translation rectiligne.

L'invention sera mieux comprise à la lecture de la description faite ci-après, à titre indicatif mais non limitatif, en référence aux dessins annexés sur lesquels :
- la figure 1 est une vue schématique en élévation latérale d'une partie d'une machine à dessiner d'une tête d'écriture selon un mode de réalisation de l'invention;
- la figure 2 est une vue en coupe suivant le plan II-II de la figure 1, et
- la figure 3 est une vue en coupe suivant le plan III-III de la figure 1.

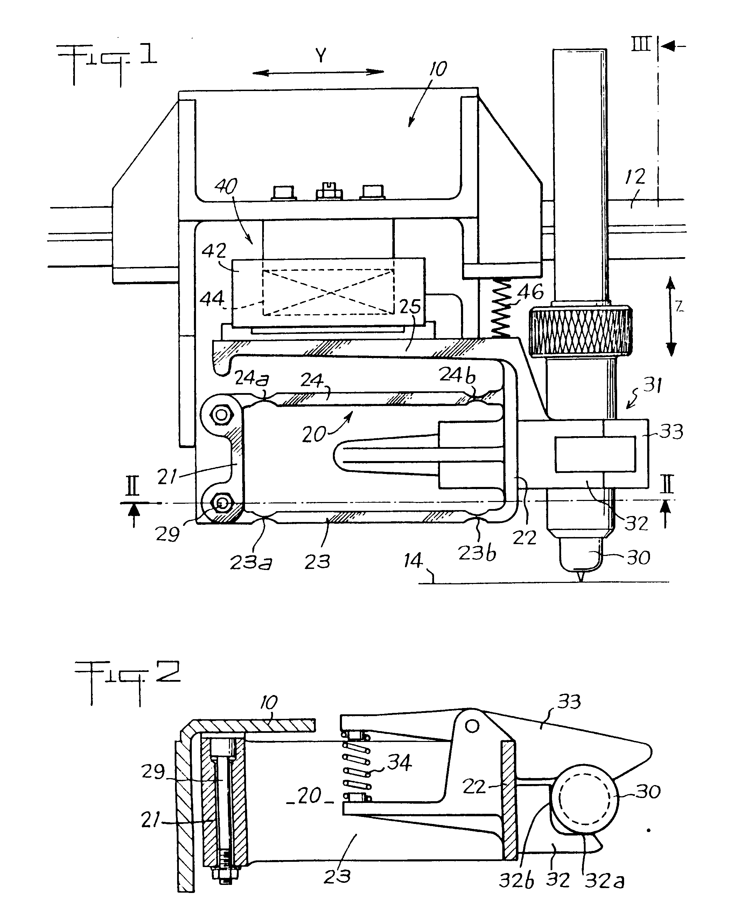

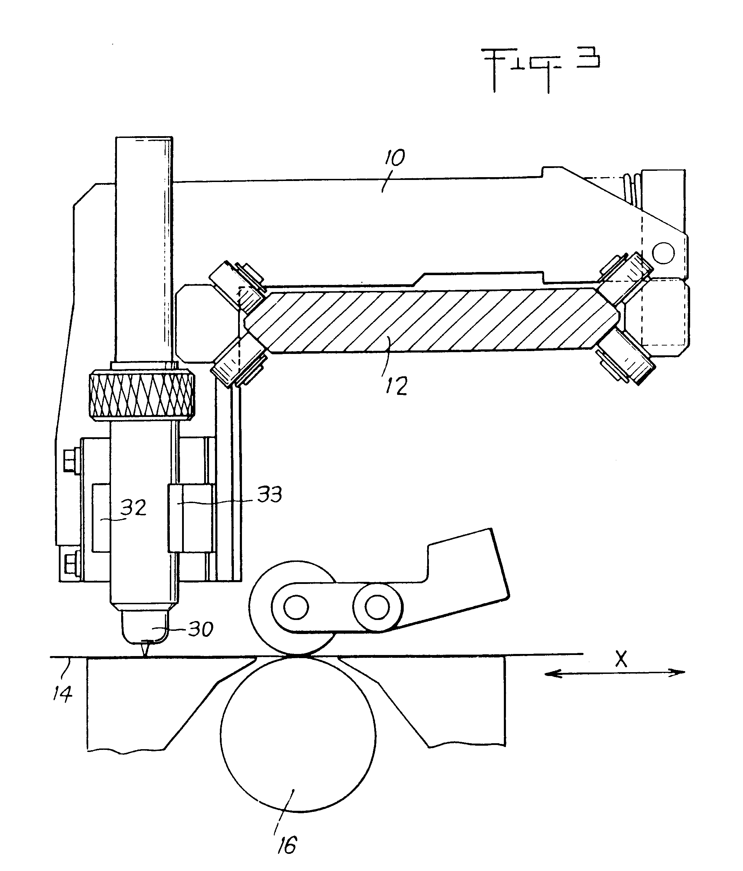

L'ensemble représenté sur les figures 1 à 3 comprend essentiellement un chariot 10 formant le corps de la tête d'écriture et mobile en translation le long d'un rail 12, un outil d'écriture 30 monté mobile sur le chariot 10 par des moyens de montage 20 et un actionneur 40 agissant sur les moyens de montage 20 pour commander des déplacements verticaux de l'outil d'écriture entre une position relevée (repos) et une position abaissée (travail).

En position de travail, comme représenté sur les figures 1 et 3, l'outil d'écriture 30 est en contact avec un support d'écriture tel qu'une feuille de papier 14. Un tracé déterminé est reproduit sur la feuille 14 par combinaison du mouvement du chariot 10 en translation le long du rail 12 (direction Y) et du mouvement de la feuille 14 (direction X) mue par un tambour 16 entraîné en rotation autour d'un axe parallèle à la direction Y.

Le déplacement du chariot 10 en direction Y peut être commandé par tout moyen approprié, par exemple par câble ou chaîne sans fin ou encore par moteur linéaire comme décrit dans le brevet français n^{o} 86 07743. L'entraînement de la feuille 14 au moyen du tambour 16 en direction X perpendiculaire à Y est réalisé par des picots portés par le tambour et pénétrant dans des perforations formées sur deux côtés parallèles de la feuille, ou par friction, la feuille étant appliquée contre le tambour au moyen de galets presseurs, par exemple comme décrit dans le brevet français n^{o} 86 00637.

Conformément à l'invention, les déplacements verticaux de l'outil d'écriture selon la direction Z sont réalisés par déformation des moyens de montage 20 de la tête d'écriture. En effet, les moyens de montage 20 présentent une structure de parallélogramme déformable avec une partie arrière ou montant 21 fixé au chariot, par exemple au moyen de vis 29, une partie avant 22 sur laquelle est fixé l'outil d'écriture et deux bras parallèles 23, 24, respectivement inférieur et supérieur reliant les parties 21 et 22. La partie arrière 21 s'étend parallèlement à la direction Z, ici verticale, de déplacement de l'outil d'écriture 30 entre positions de repos et de travail. Les bras 23, 24 présentent chacun un amincissement, respectivement 23a, 24a au voisinage de leur extrémité reliée à la partie arrière 21, et un amincissement, respectivement 23b, 24b au voisinage de leur extrémité reliée à la partie avant 22. Les amincissements 23a, 24a forment des charnières fixes par rapport au chariot autorisant un pivotement des bras autour de deux axes horizontaux parallèles, tandis que les amincissements 23b, 24b forment des charnières mobiles par rapport au chariot autorisant un pivotement autour d'axes également horizontaux, parallèles aux précédents. Grâce à cette structure en parallélogramme déformable, la partie avant 22 du corps 20 de la tête d'écriture et l'outil d'écriture 30 qui y est fixé peuvent se déplacer, par déformation du corps 20, dans une direction Z constamment verticale, parallèle à la partie arrière ou montant 21, l'outil d'écriture restant parallèle à cette direction verticale Z.

Les moyens de montage 20 de la tête d'écriture sont avantageusement réalisés par moulage en une seule pièce d'une matière plastique telle qu'un polypropylène.

L'outil d'écriture 30 a un corps cylindrique qui s'appuie sur des parois verticales formées sur la partie avant 22 du corps de tête. La fixation de l'outil d'écriture sur la partie avant 22 peut être réalisée par différents moyens magnétiques ou mécaniques. De préférence, on utilise des moyens de fixation autorisant la séparation de l'outil d'écriture par simple traction horizontale afin de permettre un changement automatique d'outil.

Dans l'exemple illustré, les moyens de fixation comportent une pince 31 ayant une mâchoire fixe 32 et une mâchoire mobile 33. La mâchoire fixe 32 est solidaire de la partie avant 22, par exemple formée d'une seule pièce avec elle et définit un logement à section en V avec deux surfaces verticales 32a, 32b, formant surfaces d'appui pour le corps cylindrique de l'outil d'écriture. La mâchoire mobile 33 est articulée sur le corps de tête 20 autour d'un axe vertical. La mâchoire mobile 33 applique le corps de l'outil d'écriture contre les surfaces verticales 32a, 32b sous l'action d'un ressort 34 qui agit sur la mâchoire mobile 33 en prenant appui sur la mâchoire fixe 32.

L'actionneur 40 comprend une partie mobile 42 agissant sur un bras 25 solidaire de la partie avant 22 des moyens de montage 20 de la tête d'écriture, la partie mobile 42 étant fixée au bras 25. Comme le montre la figure 1, le bras 25 s'étend au-dessus du bras supérieur 24 du parallélogramme, et se raccorde à la partie avant 22 des moyens de montage 20. Un ressort de traction 46 ayant ses extrémités fixées au chariot 10 et à la partie avant 22, exerce une force de rappel sur cette partie avant 22 pour ramener l'outil d'écriture en position de repos lorsque la machine n'est pas sous tension (actionneur non activé). Le ressort 46 est choisi pour juste équilibrer le poids des parties mobiles verticalement de la tête d'écriture incluant l'outil, et ne pas agir de façon sensible en cours d'écriture.

L'actionneur 40 peut être de tout type mécanique, électromécanique ou électromagnétique, par exemple un électro-aimant, un dispositif à noyau plongeur ou un dispositif à bobine mobile dans un champ, avec une partie fixe solidaire du chariot et une partie mobile solidaire du bras horizontal 25. Dans l'exemple illustré, l'actionneur 40 est de type électromagnétique avec un ensemble 44 porté par le chariot 10 et formé d'une pièce polaire en acier doux sur laquelle sont fixés deux aimants permanents, et une bobine 42 fixée au bras 25 et mobile verticalement dans le champ créé par l'ensemble 44 en réponse à l'établissement d'un courant dans la bobine 42, la bobine 42 étant ainsi déplacée vers le haut ou vers le bas selon le sens du courant qui la parcourt.

Lorsque la bobine 42 est alimentée pour être déplacée vers le bas, elle provoque une déformation des moyens de montage 20 pour amener l'outil d'écriture 30 en position de travail. L'outil 30 reste en position de travail tant que la bobine reste ainsi alimentée. Le retour de l'outil 30 en position de repos est commandé par inversion du sens du courant dans la bobine 42.

Dans la mesure où le ressort 46 est choisi juste suffisant pour équilibrer le poids des parties verticalement mobiles de la tête d'écriture, il est nécessaire d'utiliser l'actionneur pour ramener l'outil d'écriture en position de repos afin d'assurer un relevage rapide et précis de l'outil.

Par ailleurs, la déformation des moyens de montage lors du passage de l'une des positions de repos et de travail à l'autre position peut etre à caractère élastique. Dans l'exemple illustré, les moyens de montage 20 sont à l'état non déformé lorsque l'outil d'écriture est en position de travail, et n'exercent ainsi aucune action sur l'outil au cours de l'écriture. On pourra, bien entendu, prévoir que la forme au repos des moyens de montage de la tête d'écriture corresponde à toute autre position de l'outil d'écriture.

## Revendications

1. Tête d'écriture pour machine à dessiner comprenant :
un outil d'écriture (30)
un corps de tête (10) portant l'outil d'écriture (30) et monté mobile par rapport à un support d'écriture (14) dans une première direction (Y) afin de produire un tracé sur celui-ci lors du déplacement relatif entre le corps de tête et le support d'écriture ; et
des moyens de montage (20) pour monter mobile l'outil d'écriture (30) sur le corps de tête (10) dans une deuxième direction (Z) entre une position de repos écartée du support d'écriture (14) et une position de travail rapprochée du support d'écriture (14) pour laquelle l'outil d'écriture (30) produit effectivement un tracé sur le support d'écriture ; caractérisé en ce que lesdits moyens de montage (20) comprennent :
un premier côté (21) fixé au corps de tête (10) ;
un deuxième côté (22) portant l'outil d'écriture (30) ;
deux bras parallèles rigides (23, 24) reliant le premier et le deuxième côté ; et
des parties de liaison formant charnières (23a, 23b, 24a, 24b) entre chaque bras et chacun des côtés, les premier et deuxième côtés, les bras et les parties de liaison formant un parallélogramme déformable de façon à permettre le déplacement de l'outil d'écriture par rapport au corps de tête selon la deuxième direction (Z) tout en maintenant l'outil d'écriture parallèle à ladite deuxième direction.

2. Tête d'écriture selon la revendication 1, caractérisée en ce que les moyens de montage (20) incluant les premier et deuxième côtés (21, 22), les bras parallèles (23, 24) et les parties de liaison formant charnières (23a, 23b, 24a, 24b) sont réalisés en une seule pièce.

3. Tête d'écriture selon la revendication 2, caractérisée en ce que les moyens de montage (20) sont réalisés par moulage d'une matière plastique en une seule pièce.

4. Tête d'écriture selon la revendication 2 ou 3, caractérisée en ce que les parties de liaison formant charnières (23a, 23b, 24a, 24b) sont des parties amincies réalisées entre lesdits bras parallèles 23, 24 et lesdits premier et deuxième côtés (21, 22).

5. Tête d'écriture selon l'une des revendications 1 à 4, caractérisée en ce que les parties formant charnières se prolongent selon une troisième direction (X) perpendiculaire à ladite première direction (Y) pour empêcher tout mouvement de l'outil d'écriture (30) par rapport au corps de tête (10) selon la troisième direction.

6. Tête d'écriture selon l'une des revendications 1 à 5, caractérisée en ce que la longueur des bras parallèles (23, 24) comprise entre les parties de liaison, est sensiblement plus élevée que la longueur des premier et deuxième côtés prise entre les parties de liaison.

7. Tête d'écriture selon l'une des revendications 1 à 6, caractérisée en ce qu'elle comprend de plus des moyens d'actionnement (40) pour déplacer l'outil d'écriture (30) par rapport au corps de tête entre la position de travail et la position de repos.

8. Tête d'écriture selon la revendication 7, caractérisée en ce que les moyens d'actionnement (40) comprennent des moyens magnétiques (44) fixés au corps de tête pour créer un champ magnétique, et une bobine (42) fixée au deuxième côté (22) portant l'outil d'écriture (30) et sensible au champ magnétique lorsque la bobine est alimentée en courant pour déplacer l'outil d'écriture (30) entre la position de travail et la position de repos.

9. Tête d'écriture selon l'une des revendications 1 à 7, caractérisée en ce qu'elle comprend de plus des moyens de fixation pour maintenir de façon amovible l'outil d'écriture (30) sur le deuxième côté (22) des moyens de montage.

10. Tête d'écriture selon la revendication 9, caractérisée en ce que les moyens de fixation comprennent une pince (31) ayant une mâchoire fixe (32) solidaire du deuxième côté (22) et une mâchoire (33) montée mobile par rapport au deuxième côté et sollicitée par un ressort (34) pour maintenir de façon amovible l'outil d'écriture (30) entre les mâchoires (32, 33).

## Claims

1. Writing head for a drawing machine comprising :
a writing implement (30)
a head body (10) carrying the writing implement (30) and mounted movably with respect to a writing support (14) in a first direction (Y) with the object of producing a trace on this during relative displacement between the head body and the writing support ; and
mounting means (20) for movably mounting the writing implement (30) on the head body (10) in a second direction (Z) between a rest position spaced from the writing support (14) and a working position in contact with the writing support (14) for which the writing implement (30) effectively produces a trace on the writing support ; characterised in that the said mounting means (20) comprise :
a first side (21) fixed to the head body (10) ;
a second side (22) carrying the writing implement (30) ;
two parallel rigid arms (23, 24) connecting the first and the second side ; and
linking portions forming hinges (23a, 23b, 24a, 24b) between each arm and each of the sides, the first and the second sides, the arms and the linking portions forming a parallelogram deformable in a manner as to permit the displacement of the writing implement with respect to the head body according to the second direction (Z) while maintaining the writing implement parallel to the said second direction.

2. Writing head according to claim 1, characterised in that the mounting means (20) including the first and second sides (21, 22), the parallel arms (23, 24) and the linking portions forming hinges (23a, 23b, 24a, 24b) are made in a single piece.

3. Writing head according to claim 2, characterised in that the mounting means (20) are made by moulding a plastics material in a single piece.

4. Writing head according to claim 2 or 3, characterised in that the linking portions forming hinges (23a, 23b, 24a, 24b) are thinned portions made between the said parallel arms 23, 24 and the said first and second sides (21, 22).

5. Writing head according to one of claims 1 to 4, characterised in that the portions forming hinges are prolonged in a third direction (X) perpendicular to the said first direction (Y) in order to prevent any movement of the writing implement (30) with respect to the head body (10) along the third direction.

6. Writing head according to one of claims 1 to 5, characterised in that the length of the parallel arms (23, 24) comprised between the linking portions is substantially higher than the length of the first and second sides taken between the linking portions.

7. Writing head according to one of claims 1 to 6, characterised in that it comprises further actuation means (40) for displacing the writing implement (30) with respect to the head body between the working position and the rest position.

8. Writing head according to claim 7, characterised in that the actuation means (40) comprise magnetic means (44) fixed to the body of the head in order to create a magnetic field and a coil (42) fixed to the second side (22) carrying the writing implement (30) and susceptible to the magnetic field when the coil is fed with current in order to displace the writing implement (30) between the working position and the rest position.

9. Writing head according to one of claims 1 to 7, characterised in that it further comprises fixing means to maintain the writing implement (30) on the second side (22) of the mounting means in removable fashion.

10. Writing head according to claim 9, characterised in that the fixing means comprise a grip (31) having a fixed jaw (32) integral with the second side (22) and a jaw (33) mounted movably with respect to the second side and biased by a spring (34) in order to maintain the writing implement (30) removably between the jaws (32, 33).

## Patentansprüche

1. Schreibkopf für einen Zeichenapparat mit:
einem Schreibwerkzeug (30).
einem Kopfteil (10), das das Schreibwerkzeug (30) trägt und in bezug auf einen Aufzeichnungsträger (14) in einer ersten Richtung (Y) beweglich montiert ist, um bei der Relativbewegung zwischen dem Kopfteil und dem Aufzeichnungsträger eine Linie auf dem letzteren zu erzeugen, und
Montagemitteln (20) zur Montage des Schreibwerkzeugs (30) an dem Kopfteil (10) derart, daß das Schreibwerkzeug in einer zweiten Richtung (Z) zwischen einer von dem Aufzeichnungsträger (14) abgerückten Ruhestellung und einer an den Aufzeichnungsträger (14) angenäherten Arbeitsstellung beweglich ist, in der das Schreibwerkzeug (30) tatsächlich eine Linie auf dem Aufzeichnungsträger erzeugt, dadurch **gekennzeichnet,** daß die Montagemittel (20) aufweisen:
ein an dem Kopfteil (10) befestigtes erstes Seitenteil (21),
ein das Schreibwerkzeug (30) tragendes zweites Seitenteil (22),
zwei parallele starre Arme (23,24), die die ersten und zweiten Seitenteile verbinden, und
Scharniere (23a,23b,24a,24b) bildende Verbindungsbereiche zwischen jedem Arm und jedem der Seitenteile, wobei die ersten und zweiten Seitenteile, die Arme und die Verbindungsbereiche ein verformbares Parallelogramm bilden, das die Verlagerung des Schreibwerkzeugs in bezug auf das Kopfteil in der zweiten Richtung (Z) gestattet, wobei das Schreibwerkzeug parallel zu der genannten zweiten Richtung gehalten wird.

2. Schreibkopf nach Anspruch 1, dadurch **gekennzeichnet,** daß die Montagemittel (20) einschließlich der ersten und zweiten Seitenteile (21,22), der parallelen Arme (23,24) und der die Scharniere (23a,23b,24a,24b) bildenden Verbindungsbereiche in einem einzigen Stück ausgebildet sind.

3. Schreibkopf nach Anspruch 2, dadurch **gekennzeichnet,** daß die Montagemittel (20) durch ein einstückiges Formteil aus Kunststoff gebildet werden.

4. Schreibkopf nach Anspruch 2 oder 3, dadurch **gekennzeichnet,** daß die die Scharniere (23a,23b,24a,24b) bildenden Verbindungsbereiche als verdünnte Bereiche zwischen den parallelen Armen (23,24) und den ersten und zweiten Seitenteilen (21,22) ausgebildet sind.

5. Schreibkopf nach einem der Ansprüche 1 bis 4, dadurch **gekennzeichnet,** daß die die Scharniere bildenden Bereiche sich in einer dritten Richtung (X) rechtwinklig zu der ersten Richtung (Y) erstrecken, um jegliche Bewegung des Schreibwerkzeugs (30) in bezug auf das Kopfteil (10) in der dritten Richtung zu verhindern.

6. Schreibkopf nach einem der Ansprüche 1 bis 5, dadurch **gekennzeichnet,** daß die Länge der parallelen Arme (23,24) zwischen den Verbindungsbereichen wesentlich größer ist als die zwischen den Verbindungsbereichen gemessene Länge der ersten und zweiten Seitenteile.

7. Schreibkopf nach einem der Ansprüche 1 bis 6, dadurch **gekennzeichnet,** daß er außerdem Antriebsmittel (40) zum Bewegen des Schreibwerkzeugs (30) in bezug auf das Kopfteil zwischen der Arbeitsstellung und der Ruhestellung aufweist.

8. Schreibkopf nach Anspruch 7, dadurch **gekennzeichnet,** daß die Antriebsmittel (40) magnetische Mittel (44), die an dem Kopfteil befestigt sind und zur Erzeugung eines Magnetfelds dienen, und eine Spule (42) aufweisen, die an dem das Schreibwerkzeug (30) tragenden zweiten Seitenteil (22) fixiert ist und auf das Magnetfeld anspricht, wenn die Spule durch einen Strom erregt wird, so daß das Schreibwerkzeug (30) zwischen der Arbeitsstellung und der Ruhestellung bewegt wird.

9. Schreibkopf nach einem der Ansprüche 1 bis 7, dadurch **gekennzeichnet,** daß er außerdem Befestigungsmittel zum lösbaren Halten des Schreibwerkzeugs (30) an dem zweiten Seitenteil (22) der Montagemittel aufweist.

10. Schreibkopf nach Anspruch 9, dadurch **gekennzeichnet,** daß die Befestigungsmittel eine Klammer (31) mit einer festen Backe (32), die starr an dem zweiten Seitenteil (22) angebracht ist, und mit einer Backe (33), die in bezug auf das zweite Seitenteil beweglich und durch eine Feder (34) vorgespannt ist, aufweisen so dass das Schreibwerkzeug (30) lösbar zwischen den Backen (32,33) gehalten wird.
